# EUROPÄISCHE PATENTSCHRIFT

(11) **EP 0 538 564 B1**
(45) Veröffentlichungstag und Bekanntmachung des Hinweises auf die Patenterteilung: **19.01.1994**
(21) Anmeldenummer: 92113229.6
(22) Anmeldetag: 03.08.1992
(51) Int. Cl.: F02B 19/14, F02D 19/10, F02B 7/06

(54) **Selbstzündende Hubkolbenbrennkraftmaschine**
Internal combustion engine with self-ignition
Moteur à combustion interne à auto-allumage

(30) Priorität: 24.10.1991 DE 4135135
(43) Veröffentlichungstag der Anmeldung: 28.04.1993
(73) Patentinhaber: Göpel, Theo, D-80807 München (DE)
(72) Erfinder: Göpel, Theo, D-80807 München (DE)
(74) Vertreter: Reinhard - Skuhra - Weise & Partner

(56) Entgegenhaltungen:
- EP-A- 0 377 761
- DE-A- 4 042 325
- GB-A- 1 114 610
- US-A- 4 953 515

## Beschreibung

Die Erfindung betrifft eine selbstzündende Hubkolbenbrennkraftmaschine mit Direkteinspritzung für Zwei- und Viertaktmotoren.

Bezweckt wird die Schaffung von selbstzündenden Hubkolbenbrennkraftmaschinen, die sich mit großen Zylinderhubräumen, wie beispielsweise bei Schiffsdiesel oder dergleichen bis hinunter zu Dieselmotoren mit kleinen Zylinderhubräumen verwirklichen lassen, beispielsweise Kleindiesel bis zu ca. 100 cm³ für den Antrieb von Notstromaggregaten, Wasserpumpen in Entwicklungsländern und dergleichen.

Bei Brennkraftmaschinen ist es bekannt, den Brennraum zu unterteilen, um beim Verdichtungshub die Güte der Gemischbildung durch eine gute Turbulenz zu verbessern. Man unterscheidet zwischen dem sogenannten Vorkammerverfahren, dem Wirbelkammerverfahren, dem Luftspeicherverfahren und dem direkten strahleinspritzverfahren.

Bei dem Vorkammerverfahren ist eine Vorkammer vorgesehen, deren Volumen etwa 20% des Verdichtungsraum beträgt. Da Kraftstoff nur in die Vorkammer eingespritzt wird, herrscht in dieser bei Beginn der Zündung bzw. Verbrennung Luftmangel. Es kommt daher in nachteiliger Weise zu Rußbildung, unvollkommener Kraftstoffausnutzung und insbesondere zum Nachbrennen bei dem Expansionshub. Nachteilig sind die aufgrund der Brennraumzerklüftung hauptsächlich auftretenden hydraulischen Wärmeübergangsverluste, mit denen auch ein recht hoher Kraftstoffverbrauch verbunden ist.

Bei dem Wirbelkammerverfahren kommt eine Wirbelkammer zum Einsatz, deren Volumen bis zu 50% des Verdichtungsraums beträgt. Der Kraftstoff wird nur in die Wirbelkammer eingespritzt, wobei der Verbrennungsdruck zunächst in der Wirbelkammer und dann über den die Wirbelkammer mit dem Hauptverdichtungsraum verbindenden Schußkanal in den Hauptverdichtungsraum überschießt und dort auf den Kolben drückt. Auch hier besteht die Gefahr des Nachbrennens. Aufgrund des zerklüfteten Brennraums kommt es in nachteiliger Weise zu hohen Wärmeübergangsverlusten und damit zusammenhängend zu einem ziemlich hohen spezifischen Kraftstoffverbrauch.

Beim Luftspeicherverfahren wird Kraftstoff nicht in den Luftspeicher eingespritzt, sondern mit oder gegen die Überströmrichtung eines trichterförmigen Schußkanals. Die Gemischbildung im Hauptbrennraum wird wie bei dem Vorkammerverfahren und dem Wirbelkammerverfahren ebenfalls von dem brennenden Gasstrom übernommen. Als nachteilig bei dem Luftspeicherverfahren wird der etwas harte Gang der Maschine sowie der hohe Kraftstoffverbrauch angesehen.

Bei dem direkten Einspritzverfahren wird die Gemischbildung durch die Einspritzung vorgenommen, wobei die Gemischbildung aufgrund geringer oder fehlender Turbulenz gegenüber den vorgenannten Verfahren ungünstiger ist. Hinzu kommt ein hoher Luftbedarf, aus dem ein schlechter Luftausnutzungsgrad resultiert, wobei der mittlere effektive Nutzdruck nicht die Höhe wie bei Vorkammer- bzw. Wirbelkammermaschinen erreicht. Ungünstig ist auch das schlagartige Entzünden und Verbrennen des Gemischs, das sich durch den harten Gang der Maschine zeigt. Außerdem stellt das Einspritzverfahren wegen hoher Einspritzdrücke erhebliche Anforderungen an Kraftstoffpumpen.

Die vorerwähnten unterschiedlichen Verfahren haben jeweils individuelle Nachteile und stellen Kompromisse dar, bei denen die eine oder andere Verlustquelle bewußt im Sinne eines Kleinhaltens der Gesamtverluste in Kauf genommen wird. Bisher ist es unmöglich, gleichzeitig alle Verluste auf ein Mindestmaß herabzusetzen und gleichzeitig den herrschenden Anforderungen an Umweltverträglichkeit und Verbesserung des Wirkungsgrades sowie einer Vereinfachung der Maschinenaggregate Rechnung zu tragen. Dies gilt beispielsweise auch für die bisher erforderliche Höhe der Verdichtung, die den Forderungen nach einwandfreiem und wirtschaftlich arbeitendem Betrieb bei niedrigen Verdichtungsverhältnissen widerspricht. Die bisher übliche hohe Verdichtung erfordert aufgrund der Festigkeitsanforderungen schwere Maschinen, während bei der Realisierung von geringeren Verdichtungsverhältnissen auch leichtgewichtigere Maschinen gebaut werden können.

In der DE-OS 15 26 290 ist eine fremdzündende Brennkraftmaschine mit relativ geringer Verdichtung offenbart, die einen Hauptbrennraum, eine Zündkammer und einen Schußkanal besitzt. Die Größe der Zündkammer beträgt etwa 7,5% des Hauptbrennraumvolumens. Die Zündkammer weist eine Zünd- oder Glühkerze auf. Für die Kraftstoffeinspritzung ist eine Mehrstrahl-Einspritzdüse vorgesehen, die einen ersten Kraftstoffstrahl unmittelbar durch den Schußkanal in die Zündkammer und einen zweiten Kraftstoffstrahl gegen die Wandung einer Kolbenmulde spritzt. Im Zusammenhang mit der Verwendung einer Funkenzündung über die vorgesehene Zündkerze ist weiterhin nur allgemein angesprochen, daß zeitlich vor der Einspritzung der Haupteinspritzmenge in den Hauptbrennraum Kraftstoff in die Zündkammer gespritzt werden kann. Als nachteilig ist bei dieser Konzeption die komplizierte Ausgestaltung und Ansteuerung der Einspritzdüse anzusehen. Hinzu kommt, daß ein hoher Einspritzdruck erforderlich ist, wodurch auch die Ausbildung einer leichtgewichtigen Maschinenkonzeption nicht möglich ist.

In der DE-OS 29 22 683 ist eine luftverdichtende selbstzündende Brennkraftmaschine offenbart, die nach dem Wirbelkammerverfahren arbeitet und eine Einspritzdüse für die Wirbelkammer sowie eine separate Einspritzdüse für den Hauptbrennraum aufweist. Beschickt werden beide Einspritzdüsen über ein Regelventil von einer einzigen Einspritzpumpe, wobei durch das Regelventil eine last- oder drehzahlabhängige Zuschaltung der zweiten Einspritzdüse gesteuert wird. Nachteilig ist hier eine relativ große Störanfälligkeit des Systems sowie der Umstand, daß hohe Leistungsanforderungen an die Kraftstoffpumpe existieren.

Aus der DE-OS 40 33 843 ist eine Zweistoff-Brennkraftmaschine bekannt, bei der Erdgas oder andere gasförmige Brennstoffe durch eine kleine Pilotmenge zum Zünden gebracht werden sollen. Dies geschieht dadurch, daß eine kleine Pilotmenge Dieselkraftstoff oder eine andere Brennflüssigkeit in eine Selbstzündkammer eingebracht wird. Brenngas oder Erdgas wird über ein Einlaßventil in den Zylinder eingesaugt und dann im Zylinder verdichtet. Eine übliche Dieseleinspritzung liegt nicht vor. In der Mitte des Zylinderkopfes ist zwar eine Einspritzdüse vorgesehen, diese dient jedoch nur für den Start, wonach dann eine Umschaltung auf Gasbetrieb vorgesehen ist. Überdies erfolgt bei dieser Propangasbrennkraftmaschine keine Vorheizung in einer Zündkammer, wodurch eine hohe Kompression und damit zwingend erforderlich auch eine massive Zylinderkopfgestaltung erforderlich wird, die zugleich in ungünstiger Weise das Gewicht der Brennkraftmaschine erhöht.

Die Erfindung zielt darauf ab, eine Maschine der eingangs genannten Gattung hinsichtlich der Wirtschaftlichkeit ihres Betriebs zu verbessern.

Erfindungsgemäß wird diese Aufgabe durch eine selbstzündende Hubkolbenbrennkraftmaschine gelöst, bestehend aus wenigstens einem Zylinder mit einem Hauptbrennraum, wenigstens einer vergleichsweise kleineren Zündkammer für jeden Zylinder, wobei jede Zündkammer mit Hauptbrennraum über einen Schußkanal verbunden ist, und aus einer mengenregelbaren Einspritzpumpe, durch die Kraftstoff über eine Einspritzdüse in den Hauptbrennraum einspritzbar ist.

Bevorzugte weitere Ausgestaltungen der Erfindung, die die Erfindung vorteilhaft weiterbilden, sind in den nachgeordneten Patentansprüchen gekennzeichnet.

Aufgrund der erfindungsgemäßen Ausgestaltung der selbstzündenden Hubkolbenbrennkraftmaschine können vorteilhaft im Vergleich zu vorbekannten Dieselmotoren mit direkter Einspritzung ein geringes Verdichtungsverhältnis, ein geringerer Verbrennungsdruck, ein günstigerer Luftausnutzungsgrad, eine leichtere Maschinenausbildung, ein geringer Einspritzdruck, einfachere Einspritzdüsen und einfachere Einspritzpumpen realisiert werden. Zudem besteht vorteilhaft die Möglichkeit, für das Einspritzen in den Hauptbrennraum schwer zündbaren Kraftstoff, beispielsweise in Form von Rapsöl oder dergleichen, insbesondere für Großdieselmotoren-Kraftstoffe minderer Qualität (Schwerkraftstoffe) einzusetzen. Im Vergleich zu Vorkammer-, Wirbelkammer- und Luftspeicherkammer-Dieselmotoren zeichnet sich die erfindungsgemäße selbstzündende Hubkolbenbrennkraftmaschine vor allem durch einen geringen Kraftstoffverbrauch und keine oder nur geringe Rußbildung aus.

Vorteilhaft wird aufgrund der erfindungsgemäßen Konzeption der selbstzündenden Hubkolbenbrennkraftmaschine die Güte der Gemischbildung im Vergleich zu allen vorbekannten Dieselmotoren verbessert. Es werden in günstiger Weise kurze Durchbrennzeiten erreicht, weil beim Einspritzen des Kraftstoffs in den Hauptbrennraum und, bei Maschinen mit zwei getrennten Einspritzungen in den Zylinderhubraum in die Zündkammer sofort die zur restlosen Verbrennung erforderliche Menge Sauerstoff vorhanden ist.

Im Vergleich zu bisher bekannten Dieselmotoren ist ein geringer Einspritzdruck erforderlich. Die Ausbildung von Einspritzpumpen läßt sich dadurch einfach und betriebssicher konzipieren.

Als Folge des erzielbaren geringen Verdichtungsverhältnisses erreicht man gleichzeitig vorteilhaft einen geringen Verbrennungsdruck und demzufolge auch eine leichtgewichtige Ausbildung der Hubkolbenbrennkraftmaschine.

Hinzu kommt, daß beim Betrieb der erfindungsgemäßen selbstzündenden Hubkolbenbrennkraftmaschine Klopfgeräusche durch Druckspritzen im Hauptbrennraum vor OT gemindert werden, weil Druckspitzen vor OT in die vorgesehene wenigstens eine Zündkammer ausweichen können.

Aufgrund der erfindungsgemäßen Ausgestaltung der selbstzündenden Hubkolbenbrennkraftmaschine strömt während des gesamten Verdichtungshubes Luft aus dem Zylinder und Hauptbrennraum über wenigstens einen Schußkanal in die diesem zugeordnete Zündkammer. Dabei entsteht durch das Überströmen der Luft sowohl im Hauptbrennraum als auch in der bzw. den Zündkammern eine zur Gemischbildung besonders günstige Turbulenz. Vor dem oberen Totpunkt bis zum oberen Totpunkt wird Kraftstoff mengengeregelt, mittig in den Hauptbrennraum eingespritzt. Dabei gelangt durch das Überströmen der Luft vom Hauptbrennraum in die Zündkammer auch ein Teil des eingespritzten Kraftstoffs in die Zündkammer(n). Die Temperatur in jeder Zündkammer ist ca. 150 °C bis 200 °C höher eingestellt als die des Hauptbrennraums. Diese Einstellung wird dadurch erreicht, daß jede Zündkammer nicht durch Frischluft gekühlt wird und die Maschinenkühlung entsprechend im Bereich der Zündkammer verringert ist. Aufgrund dieses hohen Temperaturunterschiedes beginnt die Zündung immer in der bzw. den Zündkammern.

Bei selbstzündenden Hubkolbenbrennkraftmaschinen mit zwei getrennte Einspritzungen aufweisendem Zylinderhubraum wird zudem kurz vor OT in einer Zündkammer pro Zylinder Kraftstoff eingespritzt. In dieser Zündkammer erfolgt eine Zündung und damit der Verbrennungsbeginn. Dabei schießt ein Zündstrahl von dieser Zündkammer in den Hauptbrennraum und trifft dort auf ein durch Turbulenz gut aufbereitetes zündfähiges Gemisch. Selbst wenn die Zündung im Hauptbrennraum kurz vor OT einsetzen sollte, tritt die Druckspitze der Zündung zunächst in die Zündkammer(n) ein und erhöht in dieser bzw. diesen den Druck. Ein nagelndes Verbrennungsgeräusch, wie bei Direkteinspritzung, wird deutlich gemindert.

Die vorteilhaft eingesetzte, einfach auszubildende, nicht mengenregelbare Einspritzpumpe ist nach einer bevorzugten Ausgestaltung der Erfindung für das direkte kurz vor OT erfolgende Einspritzen einer für den Zündvorgang erforderlichen Kraftstoffmenge in die Zündkammer vorgesehen. Vorzugsweise ist für den Hauptbrennraum eine mittige Kraftstoffeinspritzung vorgesehen, wobei die Einspritzrichtung nach Bedarf festgelegt werden kann. Dabei kann nach einer weiteren Ausgestaltung der Erfindung die Anordnung derart getroffen sein, daß die mengenregelbare Einspritzpumpe für die Einspritzung von schwer zündbarem Kraftstoff und die nicht mengenregelbare Einspritzpumpe für das Einspritzen von zündfähigem Kraftstoff vorgesehen sind.

Die nur für selbstzündende Hubkolbenbrennkraftmaschinen mit nur eine einzige Einspritzung aufweisendem Zylinderhubraum vorgesehene Glüheinrichtung weist bevorzugt eine elektrische Dauerglühspirale auf. Weiterhin kann vorzugsweise als Starthilfe der Einsatz von Zündpapier vorgesehen sein, insbesondere, wenn für den Betrieb der elektrischen Dauerglühspirale ein kleiner Generator zum Einsatz kommt, der erst durch den Betrieb der selbstzündenden Hubkolbenbrennkraftmaschine angetrieben wird.

Weitere Einzelheiten und Vorteile der Erfindung sind dem anschließenden Beschreibungsteil zu entnehmen, in dem unter Bezugnahme auf die beigefügten Zeichnungen die Erfindung näher erläutert wird. Es zeigen:
- Figur 1: eine schematische Darstellung eines Ausführungsbeispiels eines Zylinders einer selbstzündenden Hubkolbenbrennkraftmaschine;
- Figur 2: eine schematische Darstellung ähnlich Figur 1 zur Erläuterung der Vorgänge beim Verdichtungshub;
- Figur 3: eine Darstellung ähnlich Figur 2 zur Erläuterung der Vorgänge beim Expansionshub;

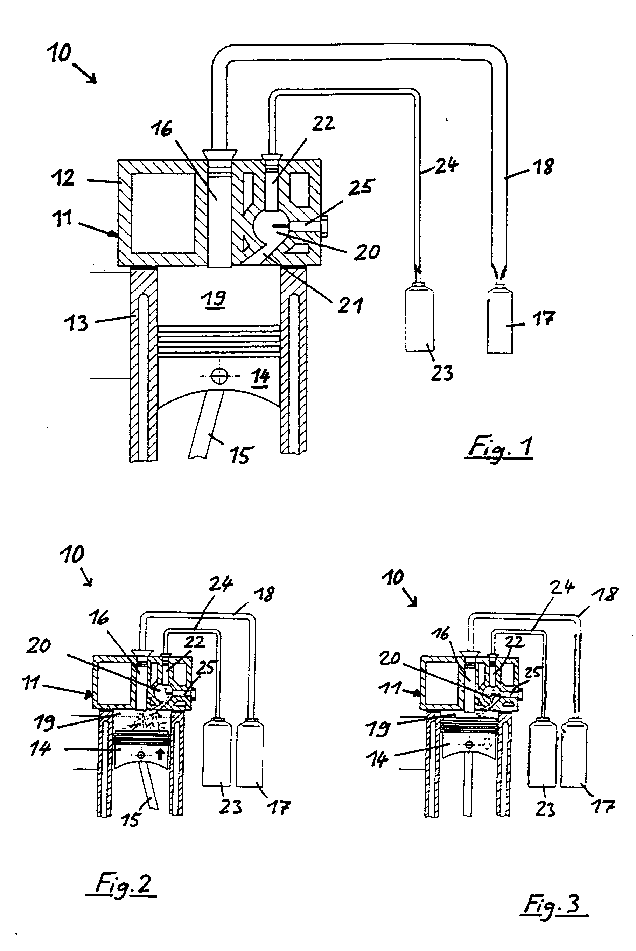

In Figur 1 ist eine schematische Darstellung einer Brennkraftmaschine 10 mit einem Zylinder 11 gezeigt. Der Zylinder 11 besteht aus einem Zylinderkopf 12, der in bekannter Weise abgedichtet auf einem Zylinderblock 13 lösbar befestigt ist. Von dem Zylinderblock 13 ist nur der obere Bereich mit einem Kolben 14 und angelenktem Pleuel 15 gezeigt. Sowohl der Zylinderblock als auch der Zylinderkopf sind in bekannter Weise von Kühlkanälen durchsetzt.

In dem Zylinderkopf 12 ist in dem Bereich der Mittelachse des Kolbens 14 eine Einspritzdüse 16 befestigt, durch die Kraftstoff mengengeregelt von einer Einspritzpumpe 17 über eine Kraftstoffleitung 18 von oben mittig in die Hauptbrennkammer 19 einspritzbar ist.

In dem Zylinderkopf 12 ist seitlich neben der Einspritzdüse 16 eine kugelförmige bzw. zylinderförmige Zündkammer 20 gebildet, die über einen sich zum Hauptbrennraum 19 erweiternden Schußkanal 21 mit dem Hauptbrennraum 19 verbunden ist. Die Zündkammer 20 ist mit einer Einspritzdüse 22 verbunden, die in dem Zylinderkopf 12 parallel zur Einspritzdüse 16 angeordnet ist und von einer nicht mengelregelbaren Einspritzpumpe 23 über eine Kraftstoffleitung 24 mit Kraftstoff zum Einspritzen versorgt wird. Nur für einen Motor mit kleinem Hubraum ist in die Zündkammer 20 ist weiterhin eine elektrische Dauerglühspirale 25 eingebaut, die in nicht dargestellter Weise mit einer elektrischen Stromversorgung, beispielsweise einer Lichtmaschine oder einer Batterie, verbunden ist. Alternativ oder zusätzlich kann in günstiger Weise als Starthilfe bei niedrigen Temperaturen zum Starten Zündpapier vorgesehen sein. Weiterhin kann auch das Zündpapier oder die elektrische Glühspirale mit einem Zündstift aus temperaturfestem wärmespeichernden Material, beispielsweise in Form einer 2 bis 3 mm stark ummantelten Keramik vorgesehen sein, der bis in den Bereich der Mitte der Zündkammer ragt und als Wärmespeicher eine Starthilfefunktion ausübt. Aus Vereinfachungsgründen wurden weiterhin die mechanischen Antriebe für die Einspritzpumpen 17 und 23 ebenso weggelassen wie Einrichtungen zur zeitlichen Steuerung der Einspritzpumpen 17 und 23 sowie zur Mengenregelung der Einspritzpumpe 17.

Die Wirkungsweise der erfindungsgemäßen Brennkraftmaschine wird nun unter Bezugnahme auf die Figuren 2 und 3 näher erläutert.

Gemäß Figur 2 befindet sich der Kolben 14, wie durch einen schwarzen Pfeil angedeutet, bei seinem Verdichtungshub auf dem Weg von UT nach OT. Während des gesamten Verdichtungshubes strömt Luft aus dem Hubraum und Hauptbrennraum 19 über den Schußkanal 21 in die Zündkammer 20. Durch das Überströmen der Luft in die Zündkammer 20 entsteht im Hauptbrennraum 19 und in der Zündkammer 20 eine außerordentlich gute Turbulenz, die in hervorragender Weise zur Gemischbildung beiträgt.

Vor Erreichen des oberen Totpunktes wird durch die Einspritzdüse 16 bis zum Erreichen des oberen Totpunkts Kraftstoff in den Hauptbrennraum 19 entsprechend der Maschinendrehzahl und Belastung mengengeregelt in die Mitte eingespritzt. Infolge des Überströmens der Luft aus dem Hauptbrennraum in die Zündkammer 20 kommt es dabei auch dazu, daß ein Teil des eingespritzten Kraftstoffs in die Zündkammer 20 mit überströmt. Die Zündkammer 20 ist dabei ca. 150° - 200°C heißer als der Hauptbrennraum 19. Verantwortlich hierfür ist die fehlende Kühlung der Zündkammer 20 durch Frischluft und entsprechend verringerte Motorkühlung im Bereich der Zündkammer.

Vor Erreichen des oberen Totpunkts (OT) erfolgt ein Einspritzen von Kraftstoff durch die Einspritzdüse 22 und führt dazu, daß im und ab OT ein Zündstrahl über den Schußkanal 21 in den Hauptbrennraum 19 schießt. In dem Hauptbrennraum kann demgemäß ab dem oberen Totpunkt die Verbrennung sofort einsetzen, wobei ein Nachbrennen vermieden wird. Wichtig ist bei der Funktionsweise, daß durch die höhere Temperatur der Zündkammer 20 in dieser gezielt die Zündung einsetzt und bereits dort auf ein durch die vorherrschende Turbulenz in der Zündkammer gut zündfähiges Gemisch trifft. Auch der aus der Zündkammer 20 durch den Schußkanal 21 in den Hauptbrennraum 19 schießende Zündstrahl trifft auf eine außerordentlich gute Gemischbildung im Hauptbrennraum.

Bei der erfindungsgemäßen selbstzündenden Hubkolbenbrennkraftmaschine 10 ist zwischen Zündkammer 20 und Hauptbrennraum 19 ein unterschiedlicher Zündverzug vorhanden, der einen unterschiedlichen Zündzeitpunkt in der Zündkammer 20 und dem Hauptbrennraum 19 bewirkt.

Soweit in den Figuren 1 bis 3 eine Glüheinrichtung 25 dargestellt ist, wird klarstellend darauf hingewiesen, daß diese bei Maschinen mit zwei getrennte Einspritzungen aufweisendem Zylinderhubraum nur als Starthilfe in Form von einer Glühspirale oder von Zündpapier bei fehlender Stromversorgung in Frage kommt. Bei Maschinen mit nur eine einzige Einspritzung aufweisendem Zylinderhubraum dagegen ist stets eine entsprechende Glüheinrichtung vorhanden.

Die erfindungsgemäße selbstzündende Hubkolbenbrennkraftmaschine bietet aufgrund der vorgesehenen Konzeption auch die Möglichkeit, unterschiedlichen Kraftstoff über die beiden Einspritzpumpen zuzuführen, beispielsweise einen zündwilligen Dieselkraftstoff für die Zündkammer 20 und einen schwer zündbaren, aber dafür preiswerteren und umweltschonenderen Kraftstoff, wie Rapsöl oder dergleichen, für den Hauptbrennraum 19.

Statt der in den Figuren 1 bis 3 dargestellten Ausgestaltung des Zylinderkopfs 12 mit einer Zündkammer 20 und einem Schußkanal 21 kann auch für jeden Zylinder wenigstens eine weitere Zündkammer mit Schußkanal vorgesehen sein, wobei nur für eine Zündkammer pro Zylinder eine Einspritzung von einer einzigen nicht mengenregelbaren Einspritzpumpe vorgenommen wird, und wobei das Volumen der Zündkammer(n) etwa 15-40 % des Verdichtungsraums beträgt.

## Patentansprüche

1. Selbstzündende Hubkolbenbrennkraftmaschine (10, 10', 10''), bestehend aus:
wenigstens einem Zylinder (11, 11', 11'') mit einem Hauptbrennraum (19, 19', 19''),
wenigstens einer vergleichsweise kleineren Zündkammer (20, 20', 20'') für jeden Zylinder (11, 11', 11''), wobei jede Zündkammer (20, 20', 20'') mit dem Hauptbrennraum (19, 19', 19'') über einen Schußkanal (21, 21', 21'') verbunden ist,
einer mengenregelbaren Einspritzpumpe (17, 17', 17''), durch die Kraftstoff über eine Einspritzdüse (16, 16', 16'') in den Hauptbrennraum (19, 19', 19'') einspritzbar ist, und aus
einer Einspritzpumpe (23) ohne Mengenregelung für eine Zündkammer (20) pro Zylinder, durch die Kraftstoff separat in die Zündkammer (20) einspritzbar ist.

2. Selbstzündende Hubkolbenbrennkraftmaschine (10, 10', 10'') nach Anspruch 1, bestehend aus:
wenigstens einem Zylinder (11, 11', 11'') mit einem Hauptbrennraum (19, 19', 19''),
wenigstens einer vergleichsweise kleineren Zündkammer (20, 20', 20'') für jeden Zylinder (11, 11', 11''), wobei jede Zündkammer (20, 20', 20'') mit dem Hauptbrennraum (19, 19', 19'') über einen Schußkanal (21, 21', 21'') verbunden ist,
einer mengenregelbaren Einspritzpumpe (17, 17', 17''), durch die Kraftstoff über eine Einspritzdüse (16, 16', 16'') in den Hauptbrennraum (19, 19', 19'') einspritzbar ist,
einer Einspritzpumpe (23) ohne Mengenregelung für eine Zündkammer (20) pro Zylinder, durch die Kraftstoff separat in die Zündkammer (20) einspritzbar ist, und aus einer Glüheinrichtung (25, 25', 25'') für eine Zündkammer (20, 20', 20'') pro Zylinder (11, 11', 11'').

3. Maschine nach Anspruch 1, dadurch gekennzeichnet, daß die nicht mengenregelbare Einspritzpumpe (23) für das direkte Einspritzen einer für den Zündvorgang in der Zündkammer (20) erforderlichen Kraftstoffmenge über eine Einspritzdüse (22) vorgesehen ist.

4. Maschine nach einem der vorangehenden Ansprüche, dadurch gekennzeichnet, daß für den Hauptbrennraum (19, 19', 19'') eine mittige Kraftstoffeinspritzung vorgesehen ist.

5. Maschine nach einem der Ansprüche 1, 3 oder 4, dadurch gekennzeichnet, daß die mengenregelbare Einspritzpumpe (17, 17', 17'') für das Einspritzen von schwer zündbarem Kraftstoff vorgesehen ist, während durch die nicht mengenregelbare Einspritzpumpe (23) zündfähiger Kraftstoff einspritzbar ist.

6. Maschine nach einem der vorangehenden Ansprüche, dadurch gekennzeichnet, daß für die Zündkammer eine Glüheinrichtung in Form einer elektrischen Dauerglühspirale (25, 25', 25'') vorgesehen ist.

7. Maschine nach einem der Ansprüche 1 bis 5, dadurch gekennzeichnet, daß für die Zündkammer (20, 20') als Starthilfe ein Zündstift aus temperaturfestem wärmespeichernden Material vorgesehen ist, der bis in den Bereich der Mitte der Zündkammer (20, 20') ragt.

8. Maschine nach einem der vorangehenden Ansprüche, dadurch gekennzeichnet, daß für die Zündkammer (20, 20') als Starthilfe Zündpapier vorgesehen ist.

9. Maschine nach einem der vorangehenden Ansprüche, dadurch gekennzeichnet, daß das Volumen der Zündkammer(n) (20, 20', 20'') etwa 15 bis 40 % des Verdichtungsraums beträgt.

10. Maschine nach einem der vorangehenden Ansprüche, dadurch gekennzeichnet, daß die Betriebstemperatur jeder Zündkammer (20, 20', 20'') durch fehlende Ausspülung von heißen Abgasen beim Ausschub etwa 150 °C bis 200 °C höher einstellbar ist, als die des Hauptbrennraums (19, 19', 19'').

## Claims

1. A self-igniting reciprocating internal combustion engine (10, 10', 10'') comprising
at least one cylinder (11, 11', 11'') having a main combustion chamber (19, 19', 19''),
at least one comparably smaller ignition chamber (20, 20', 20'') for each cylinder (11, 11', 11''), wherein each ignition chamber (20, 20', 20'') is connected to the main combustion chamber (19, 19', 19'') through a flash passage (21, 21', 21''),
a variable-capacity fuel injection pump (17, 17', 17'') for injecting fuel through a fuel injector (16, 16', 16'') into the main combustion chamber (19, 19', 19''), and
a fixed-capacity fuel injection pump (23) for each ignition chamber (20) per cylinder for injecting fuel separately into the ignition chamber (20).

2. A self-igniting reciprocating internal combustion engine (10, 10', 10'') according to claim 1 comprising
at least one cylinder (11, 11', 11'') having a main combustion chamber (19, 19', 19''),
at least one comparably smaller ignition chamber (20, 20', 20'') for each cylinder (11, 11', 11''), wherein each ignition chamber (20, 20', 20'') is connected to the main combustion chamber (19, 19', 19'') through a flash passage (21, 21', 21''),
a variable-capacity fuel injection pump (17, 17', 17'') for injecting fuel through a fuel injector (16, 16', 16'') into the main combustion chamber (19, 19', 19''),
a fixed-capacity fuel injection pump (23) for each ignition chamber (20) per cylinder for injecting fuel separately into the ignition chamber (20), and
a glow means (25, 25', 25'') for each ignition chamber (20, 20', 20'') per cylinder (11, 11', 11'').

3. An engine according to claim 1, wherein the fixed-capacity fuel injection pump (23) is provided for directly injecting fuel in a quantity which is sufficient for the ignition in the ignition chamber (20) through a fuel injector (22).

4. An engine according to any of the preceding claims, wherein a centrally disposd fuel injector is provided for injecting fuel into the main combustion chamber (19, 19', 19'').

5. An engine according to claim 1, 3 or 4, wherein the variable-capacity fuel injection pump (17, 17', 17'') serves to inject difficultly ignatable fuel and the fixed-capacity fuel injection pump (23) serves to inject readily ignitable fuel.

6. An engine according to any one of the preceding claims, wherein a glow means in form of a heater coil (25, 25', 25''), which is continuously electrically energizable, is provided for the ignition chamber.

7. An engine according to any one of claims 1 to 5, wherein an igniting pin, which is made of temperature-resistant and heat-storing material and which projects into the middle region of the ignition chamber (20, 20'), is provided as a starting aid for the ignition chamber (20, 20').

8. An engine according to any one of the preceding claims, wherein igniting paper is provided as a starting aid for the ignition chamber (20, 20').

9. An engine according to any one of the preceding claims, wherein the ignition chamber volume (20, 20', 20'') is about 15 to 40 % of the displacement volume.

10. An engine according to any one of the preceding claims, wherein the operation temperature in each ignition chamber (20, 20', 20'') is set to exceed the temperature of the main combustion chamber (19, 19', 19'') by about 150 to 200°C due to a lack of flushing of hot exhaust gases with the expulsion thereof.

## Revendications

1. Moteur à combustion interne (10, 10', 10'') à piston alternatif à allumage spontané, constitué :
d'au moins un cylindre (11, 11', 11'') comportant une chambre de combustion principale (19, 19', 19''),
d'au moins une chambre d'allumage (20, 20', 20''), relativement plus petite, pour chaque cylindre (11, 11', 11''), chaque chambre d'allumage (20, 20', 20'') étant reliée à la chambre de combustion principale (19, 19', 19'') par un conduit de projection (21, 21', 21''),
d'une pompe d'injection à débit réglable (17, 17', 17''), au moyen de laquelle du carburant peut être injecté dans la chambre de combustion principale (19, 19', 19'') au moyen d'un injecteur (16, 16''), et
d'une pompe d'injection (23) sans réglage de débit, pour une chambre d'allumage (20) par cylindre, au moyen de laquelle du carburant peut être injecté séparément dans la chambre d'allumage (20).

2. Moteur à combustion interne (10, 10'') à piston alternatif et à allumage spontané, suivant la revendication 1, constitué :
d'au moins un cylindre (11, 11', 11'') comportant une chambre de combustion principale (19, 19', 19''),
d'au moins une chambre d'allumage (20, 20', 20''), relativement plus petite, pour chaque cylindre (11, 11', 11''), chaque chambre d'allumage (20, 20', 20'') étant reliée à la chambre de combustion principale (19, 19', 19'') par un conduit de projection (21, 21', 21''),
d'une pompe d'injection à débit réglable (17, 17', 17''), au moyen de laquelle du carburant peut être injecté dans la chambre de combustion principale (19, 19', 19'') au moyen d'un injecteur (16, 16', 16''),
d'une pompe d'injection (23) sans réglage de débit, pour une chambre d'allumage (20) par cylindre, au moyen de laquelle du carburant peut être injecté séparément dans la chambre d'allumage (20) et
d'un dispositif de préchauffage (25, 25', 25'') pour une chambre d'allumage (20, 20', 20'') par cylindre (11, 11', 11'').

3. Moteur suivant la revendication 1, caractérisé en ce que la pompe d'injection (23) à débit non réglable est prévue pour l'injection directe, au moyen d'un injecteur (22), d'un débit de carburant nécessaire pour le phénomène d'inflammation dans la chambre d'allumage (20).

4. Moteur suivant l'une des revendications précédentes, caractérisé en ce qu'une injection centrale de carburant est prévue pour la chambre de combustion principale (19, 19', 19'').

5. Moteur suivant l'une des revendications 1, 3 ou 4, caractérisé en ce que la pompe d'injection (17, 17', 17'') à débit réglabie est prévue pour l'injection d'un carburant difficilement inflammable, tandis qu'un carburant plus facilement inflammable peut être injecté au moyen de la pompe à injection (23) à débit non réglable.

6. Moteur suivant l'une des revendications précédentes, caractérisé en ce qu'il est prévu, pour la chambre d'allumage, un dispositif de préchauffage se présentant sous la forme d'une spirale électrique de préchauffage de longue durée (25, 25', 25'').

7. Moteur suivant l'une des revendications 1 à 5, caractérisé en ce qu'il est prévu, pour la chambre d'allumage (20, 20') et en tant qu'auxiliaire de démarrage, un igniteur, en une matière accumulant la chaleur et résistant à la température, qui fait saillie jusque dans la zone du centre de la chambre d'allumage (20, 20').

8. Moteur suivant l'une des revendications précédentes, caractérisé en ce qu'un papier nitré est prévu comme auxiliaire de démarrage pour la chambre d'allumage (20, 20').

9. Moteur suivant l'une des revendications précédentes, caractérisé en ce que le volume de la ou des chambres d'allumage (20, 20', 20'') est égal à 15 à 40 % environ de celui de la chambre de compression.

10. Moteur suivant l'une des revendications précédentes, caractérisé en ce que, par une absence de balayage par des gaz brûlés chauds, la température de fonctionnement de chaque chambre d'allumage (20, 20', 20'') peut être-réglée, lors de la course de détente, à une valeur supérieure de 150 à 200 °C environ à celle de la chambre de combustion principale (19, 19', 19'').
